## Europäisches Patentamt

## European Patent Office

## Office européen des brevets

(19)

(11) Publication number: **0 281 231**
**A2**

(12)

# EUROPEAN PATENT APPLICATION

(21) Application number: 88300523.3

(22) Date of filing: 22.01.88

(51) Int. Cl.⁴ **B65G 65/42**

(30) Priority: 23.01.87 US 6163

(43) Date of publication of application:
07.09.88 Bulletin 88/36

(84) Designated Contracting States:
DE FR GB IT NL SE

(71) Applicant: **Westelaken, Christianus Marinus Theresia**
**P.O. Box 4547**
**East Lansing Michigan 48826-4547(US)**

(72) Inventor: **Westelaken, Christianus Marinus Theresia**
**P.O. Box 4547**
**East Lansing Michigan 48826-4547(US)**

(74) Representative: **Davies, Christopher Robert et al**
**Frank B. Dehn & Co. Imperial House 15-19 Kingsway**
**London WC2B 6UZ(GB)**

(54) **Discharge device for particulate material.**

(57) A device is described for withdrawing particulate material from a series of outlets extending across the bottom of a storage container or bin (10). The outlets are arranged in a row with each outlet having a front wall and a rear wall (16). A discharge channel is positioned beneath the row of outlets and in alignment with the row, the channel having parallel side walls extending downwardly adjacent the sides of the outlets, a platform (15) joining the side walls and an endless conveyor (17) adapted to move longitudinally within the channel along the platform. The bottom ends of the outlet front and rear walls (16) are vertically spaced from the conveyor on the platform in progressively increasing amounts in the direction of travel of the conveyor, whereby particulate material can be discharged at a substantially uniform rate across the storage bin.

FIG. 1

## Discharge device for particulate material

This invention relates to a discharge device for withdrawing particulate material from a series of outlets extending across the bottom of a storage container.

There are numerous industrial situations where it is desirable to be able to discharge particulate material at a uniform rate from the bottom of a storage bin or tower. The particulate materials may include a wide range of industrial chemicals, cereal grains, animal feeds, etc. and typically these materials have widely varying particle sizes and weights. Particularly when very large storage containers are used, there are frequently serious problems of the particulate material segregating based upon particle size and weight, with the larger, easy flowing particles moving toward the outer walls of the container and the smaller, less free-flowing particles forming a separate cone or donut. When the particles segregate as to size, the segregated portions exhibit different flow and channeling characteristics and the result is an uneven discharge of particulate material from the bottom of the container.

One attempt at avoiding the above problem is the "live bin bottom" such as that described in U.S. Patent 3,602,380. However, it is a complex and expensive system utilizing separately controlled agitators and tapered screw conveyors that cover the entire bottom of the bin.

It has also been known to use an endless conveyor beneath an opening as a discharge means for particulate material. One such arrangement is shown in U.S. Patent 1,706,708 issued March 26, 1929. That device shows only small down spouts with each down spout separately discharging from a conveyor.

The object of the present invention is to utilize an endless conveyor in a unique manner for uniformly withdrawing particulate material from outlets extending across the bottom of a storage container or bin.

The present invention relates to a device for withdrawing particulate material from a series of outlets extending across the bottom of a storage container. The outlets are arranged in a row with each outlet having a front wall and a rear wall. A discharge channel is positioned beneath the row of outlets and in alignment with the row, the channel having parallel side walls extending downwardly adjacent the sides of the outlets, a platform joining the side walls and an endless conveyor adapted to move longitudinally within the channel along the platform. The bottom ends of the outlet front and rear walls are vertically spaced from the conveyor on the platform in progressively increasing amounts in the direction of travel of the conveyor, whereby particulate material can be discharged at a substantially uniform rate across the storage container.

The discharge device of this invention typically is attached to the bottom of a storage bin or tower and may span the entire bottom of the bin to provide a first in-first out arrangement or it may take the form of a series of separate laterally spaced openings to provide a blended discharge from across the bottom of the bin. In the first in-first out arrangement, the outlets are formed by a series of upwardly extending divider plates extending across between opposite side walls with the bottom ends of the divider plates being vertically spaced from the conveyor on the platform in progressively increasing amounts in the direction of travel of the conveyor.

If the bin has a small vertical height, e.g. less than 5 feet, the divider plates may be vertical with the entire load of the particulate material being carried by the conveyor platform. However, with increasing height of the bin, the load being carried by the conveyor may become very significant. This load may be relieved by providing inclined deflector plates to carry a substantial portion of the load. Preferably these inclined deflector plates form inclined upward extensions of the vertical divider plates, with the inclined portions being of substantially equal length and the divider plates being of progressively decreasing lengths in the direction of travel of the conveyor. Because of the angle of repose of the particulate material, the inclined deflector plates serve to carry a substantial portion of the weight of the particulate material moving downwardly through the bin. Preferably, the top end of one deflector plate is substantially in vertical alignment with the next adjacent divider plate.

The endless conveyor may be in the form of a conveyor belt or in the form of an endless chain or chains with transverse drag bars.

Certain embodiments of the invention will now be described, by way of example only, with reference to the accompanying drawings, in which:

Figure 1 is a schematic view of a discharge device according to the invention;

Figure 2 is a side elevation in partial section of the discharge device;

Figure 3 is an end elevational view of the device of Figure 2;

Figure 4 is a further end elevational view of the device of Figure 2;

Figure 5 is a sectional view of Figure 4 along line V-V;

Figure 6 is a sectional view of Figure 2 along line VI-VI;

Figure 7 is a sectional view of Figure 3 along line VII-VII;

Figure 8 is a sectional view of Figure 2 along line VIII-VIII;

Figure 9 is an isometric view of a series of divider and deflector plates;

Figure 10 is a plan view of a portion of a conveyor chain;

Figure 11 is a side elevational view of one end of a further embodiment of the discharge device;

Figure 12 is a sectional view of the device of Figure 11;

Figure 13 is a sectional view of a belt conveyor;

Figure 14 is a sectional view of a further discharge arrangement;

Figure 15 is an end elevation of the discharge device attached to a bin with two sloped bottom walls;

Figure 16 is an end elevation of the discharge device attached to a bin with one sloped bottom wall;

Figure 17 is an end elevation of the discharge device covering the entire cross-section of a bin; and

Figure 18 is a side elevational view in partial section of a further embodiment of the discharge device.

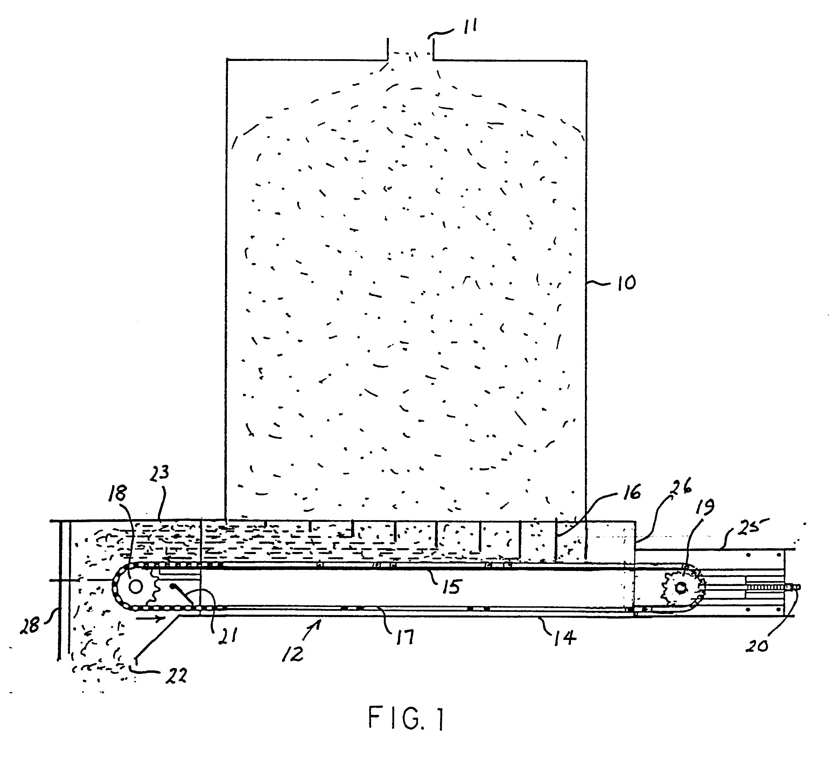

The embodiment illustrated in Figure 1 shows the basic principle of the invention. A bin or container 10 for particulate material has an inlet opening 11 at the top and an open bottom. Connected beneath the bottom opening is a discharge service 12 in accordance with the invntion. It includes a platform wall 15 on which is supported an endless conveyor belt or chain 17. The platform wall is mounted between a pair of side walls extending up on each side of the bottom opening of the bin. Also extending across between the side walls are a series of divider plates 16 forming discharges for particulate material therebetween.

Particulate matter flows down from the storage bin 10 between the divider plates 16 and onto the platform 15 where it is carried forward by the conveyor. As can clearly be seen from Figure 1, in the direction of travel of the conveyor, the space between the bottom end of each divider plate 16 and conveyor platform 15 progressively increases. This means that the depth of particulate material increases from one end of the discharge device to the other. Thus, with the conveyor moving in a forward direction, the layer of particulate material passing under the first divider plate 16 becomes a bottom layer on which a second layer of particulate material is deposited between the first and second divider plates and the layer passing beneath the second divider plate then contains as the lower layer that layer which passed beneath the first divider plate, while the second layer is the new particulate material layer deposited between the first and second divider plates. This pattern of building layers continues across the width of the storage bin such that the layer of particulate material emerging from beneath the last divider plate is the sum of the layers deposited between each adjacent pair of divider plates. If the divider plates are equally spaced from each other and the vertical spacings progress uniformly, the particulate matter moves downwardly through the storage bin at a uniform rate across the entire width of the bin.

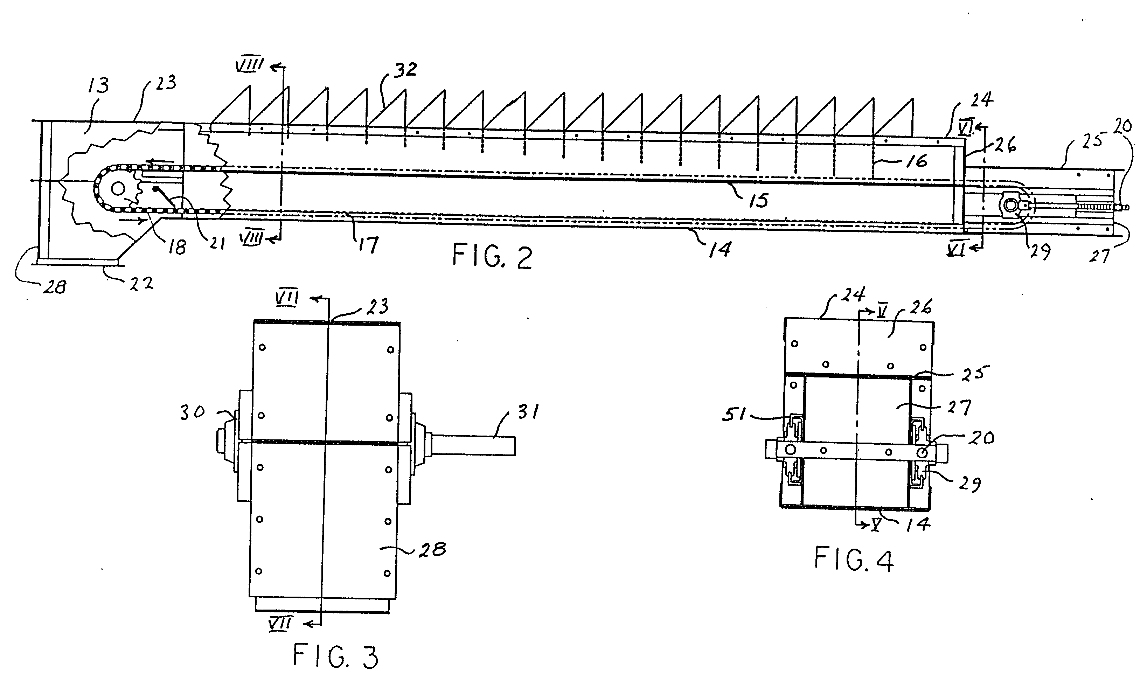

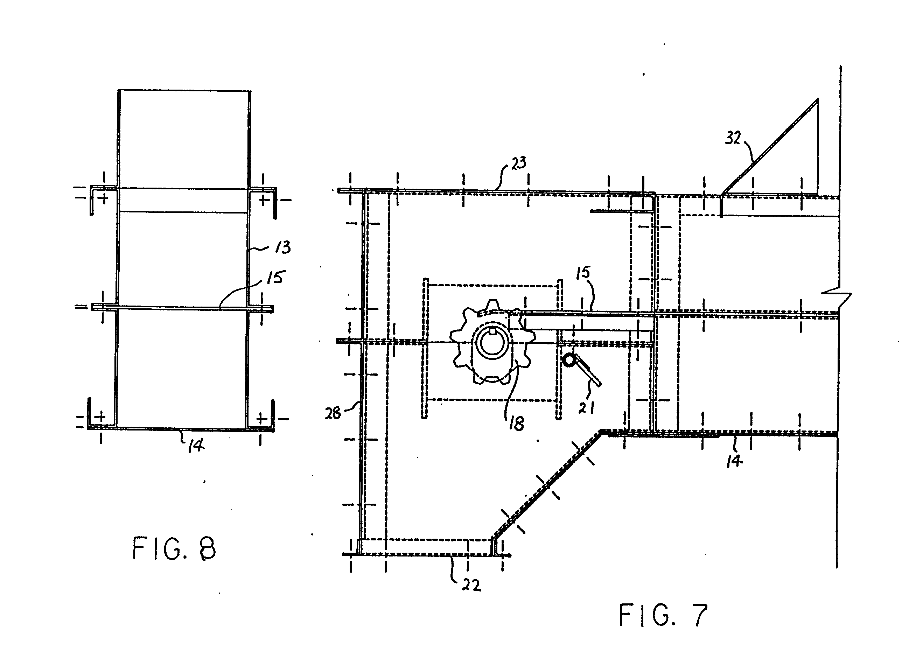

One preferred embodiment of the device of this invention is shown in greater detail in Figures 2 to 10. Basically, the discharge device 12 has a pair of spaced side walls 13 joined at the bottom by a bottom wall 14 and also joined by an intermediate platform wall 15. The platform wall 15 supports a conveyor chain 17 mounted on a drive sprocket 18 and an idler sprocket 19. The chain 17 has drag bars 35 extending to each side for dragging particulate material along the platform.

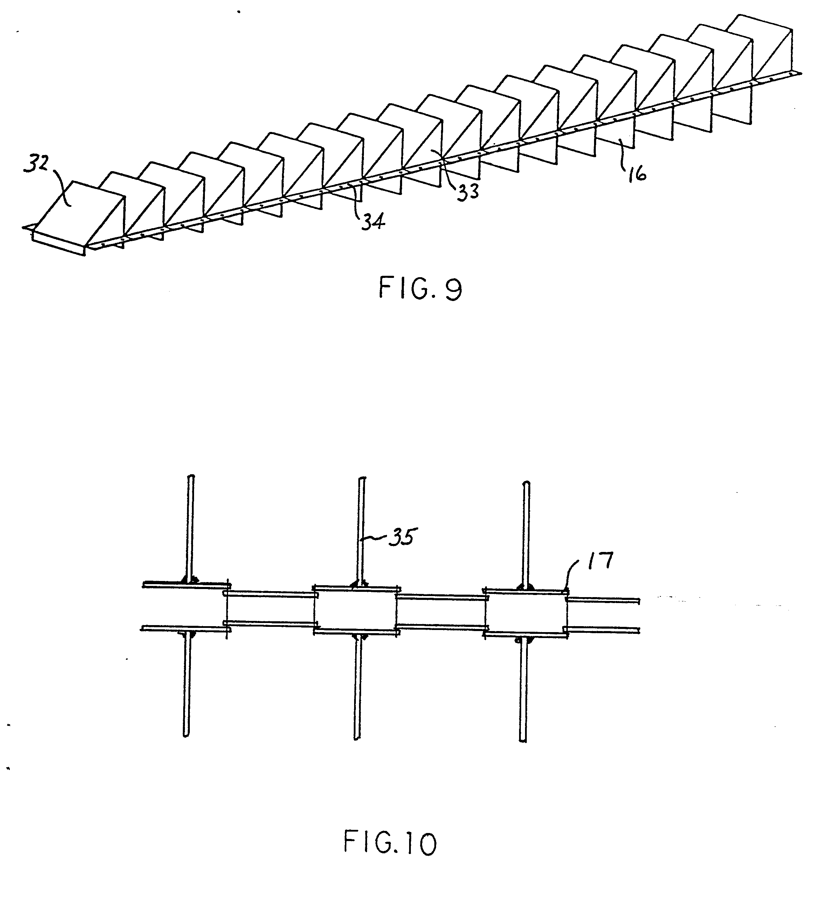

Also mounted across between the side walls 13 above the platform wall 15 are a series of divider plates 16. As explained above, in the direction of travel of the conveyor, the space between the bottom end of each divider plate 16 and the conveyor platform 15 progressively increases. According to a preferred feature, each divider plate 16 includes as an upward inclined extension thereof a deflector plate 32. As can best be seen from Figure 9, each divider plate 16 and deflector plate 32 may be formed as a separate integral unit with triangular end panels 33 and support flanges 34. These support flanges 34 rest on top of side walls 13 such that the deflector plates 32 project upwardly into the bottom of the bin 10.

The ends of the discharge device project beyond the edges of the bin and at one end includes a short top wall 23, an end wall 28 and a bottom discharge outlet 22. The opposite end of the discharge device includes two upper wall extensions 24 and 25 and end walls 26 and 27.

The drive end for the conveyor includes a drive sprocket 18 mounted in bearings 30 and driven by drive shaft 31. The idler end of the conveyor includes a sprocket 19 mounted on a shaft in slideable bearing blocks 29. These slide in guideways 51 and are used for adjusting the tension on the conveyor chain by means of the adjustment mechanism 20.

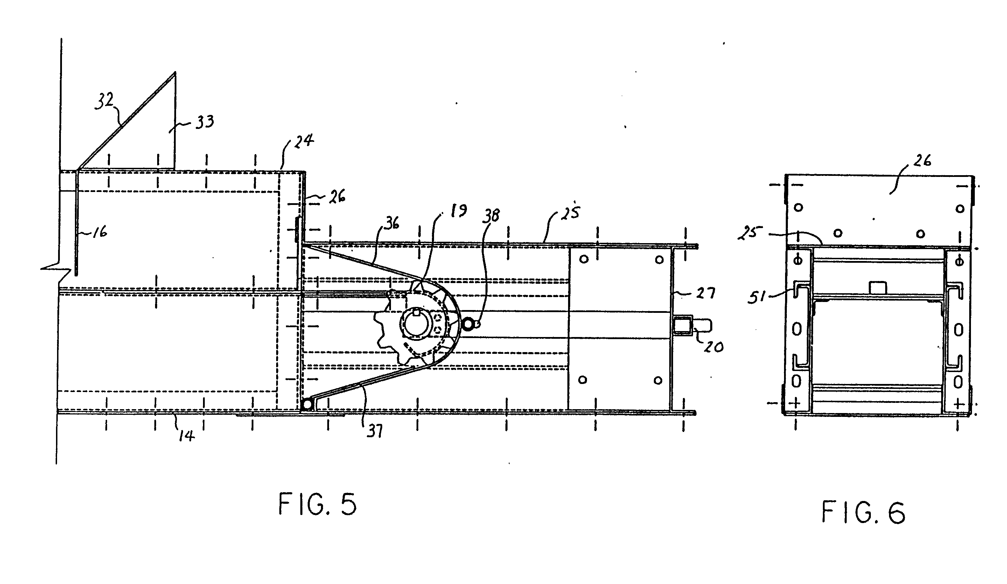

As can be seen in greater detail from Figure 5, the idler sprocket 19 is preferably mounted within a self-cleaning device which prevents accumulation of particulate material at the idler sprocket and of the conveyor. The self-cleaning device primarily comprises a U-shaped panel 36 which is fixed to the bearing block 29 such that the distance between the sprocket 19 and the rounded portion of panel 36 is fixed. A second panel member 37 is mounted in a lower region inside the U-shaped panel 36. This panel 37 is fixed against longitudinal movement and presses downwardly against the lower end of panel 36. When idler sprocket 19 is moved horizontally in slot 38, the U-shaped panel 36 moves with it and slides with respect to panel 37. Thus, when the location of the idler sprocket 19 is moved, no pockets are formed where particulate material may accumulate. Also to minimize accumulation of particulate material within the system, a wiper blade 21 may be provided adjacent drive sprocket 18. This wiper blade wipes the chain and drag bars, knocking particulate material therefrom so that it falls down through the discharge outlet 22.

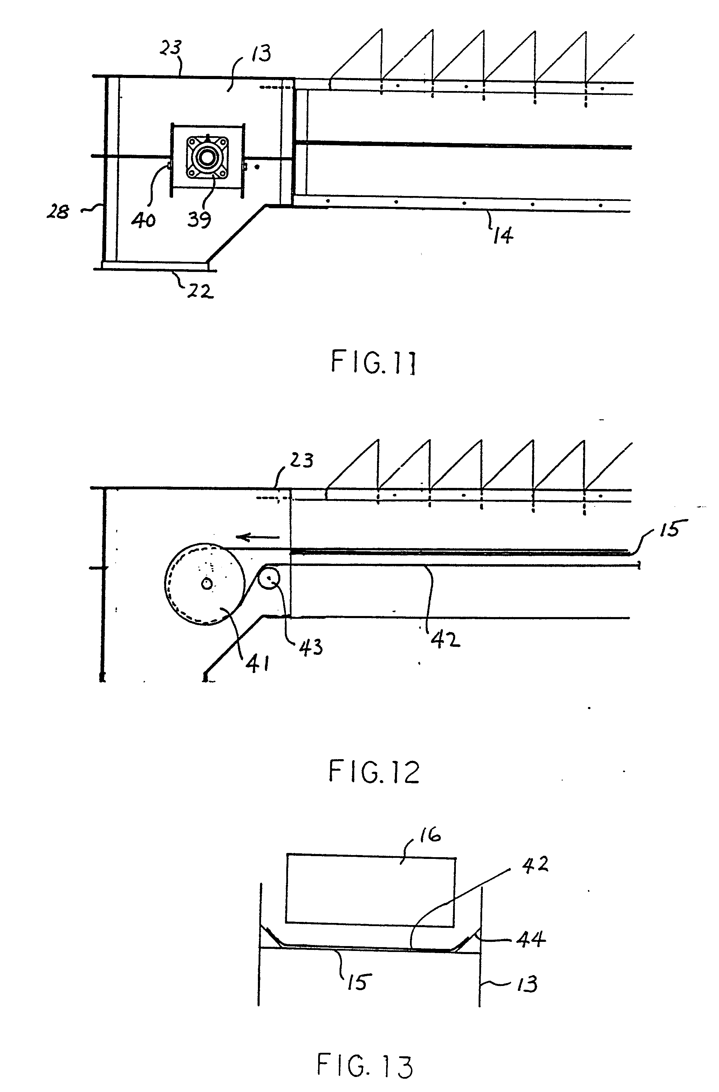

The above description has shown a chain drive for the conveyor and chain conveyors are exceedingly strong and are capable of operating over considerable lengths. However, there are limitations as to the speed at which a chain conveyor may safely operate. Belt conveyors, on the other hand, may operate at much higher speeds but for shorter distances than the chain conveyor. Figures 11 to 13 show a belt conveyor arrangement for the invention. The conveyor belt 42 is mounted on pulleys, including a drive pulley 41. This pulley is mounted on a drive shaft in a pair of bearing blocks 39. One of these bearing blocks has lateral adjustments 40 for aligning the drive shaft and pulley 41 with respect to the belt 42. Preferably the belt is wrapped around the drive pulley 41 by about 270° by means of the idler pulley 43.

In order to minimize accumulation of particulate material at the sides of the conveyor belt, it preferably travels along the platform wall 15 while being inclined upwardly at the side edges by means of inclined plates 44. As will be seen from Figure 13, the main weight of the particulate material passing between divider plates 16 will be carried by the flat portion of belt 42.

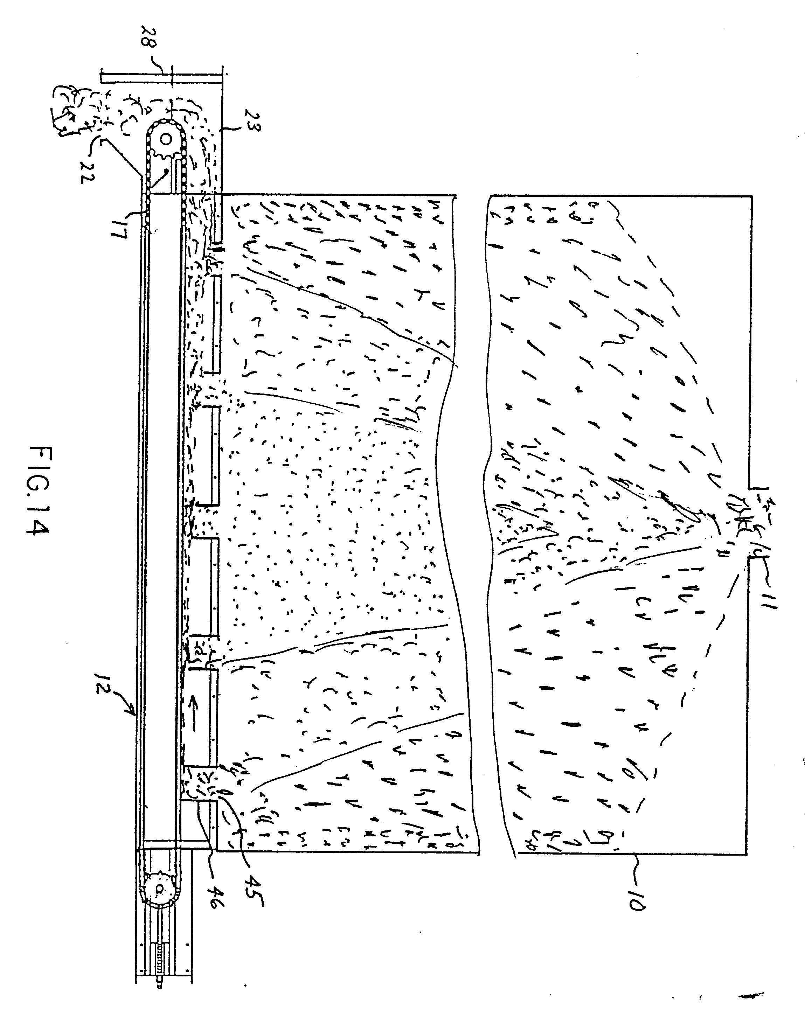

Figure 14 shows another embodiment of the invention which may particularly be used in very large storage bins, e.g. bins having a diameter of thirty feet or more. Extending across the bottom of bin 10 are a series of spaced openings 45 beneath which divider plates 46 extend downwardly, forming discharges therebetween. The remainder of the discharge system is a conveyor arrangement similar to the conveyor device described in Figures 1 to 10, including the conveyor platform 15, bottom wall 14, conveyor chain 17 with drag bars 35 and discharge outlet 22.

As will be seen from Figure 14, the vertical spacings between the bottom ends of the discharge outlets and the conveyor platform 15 increase in the direction of travel of the conveyor so that each discharge delivers a layer of particulate material onto the conveyor. It can further be seen from Figure 14 that the particulate material entering through inlet 11 tends to segregate within the storage bin 10 such that the large particles have migrated to the outer walls, while finer particles have formed an intermediate donut-shaped section and the finest particles have formed a central cone. This means that unless there is some means for controlling the rate of flow from different regions of the bottom of the bin, the fine materials will flow out at a much greater rate than the large materials such that at any given time the material being discharged from the storage bin will not be a true representation of the total content of the bin. In other words, at one point during discharge of the bin the material may largely consist of fines, while at another point the discharge may contain almost no fines.

With the discharge device of the present invention, by appropriate size and location of openings 45 and divider plates 46, it will be seen that there is a controlled discharge across the bin such that at all times the particulate material discharging through outlet 22 is a blended mixture of selected samples taken from points across the bin 10, these including the coarser materials from the outer edges, the medium particles from intermediate zones and the smaller particles from the central zone. Thus, the blended mixture discharging through outlet 22 is a true representation of the total content of the bin.

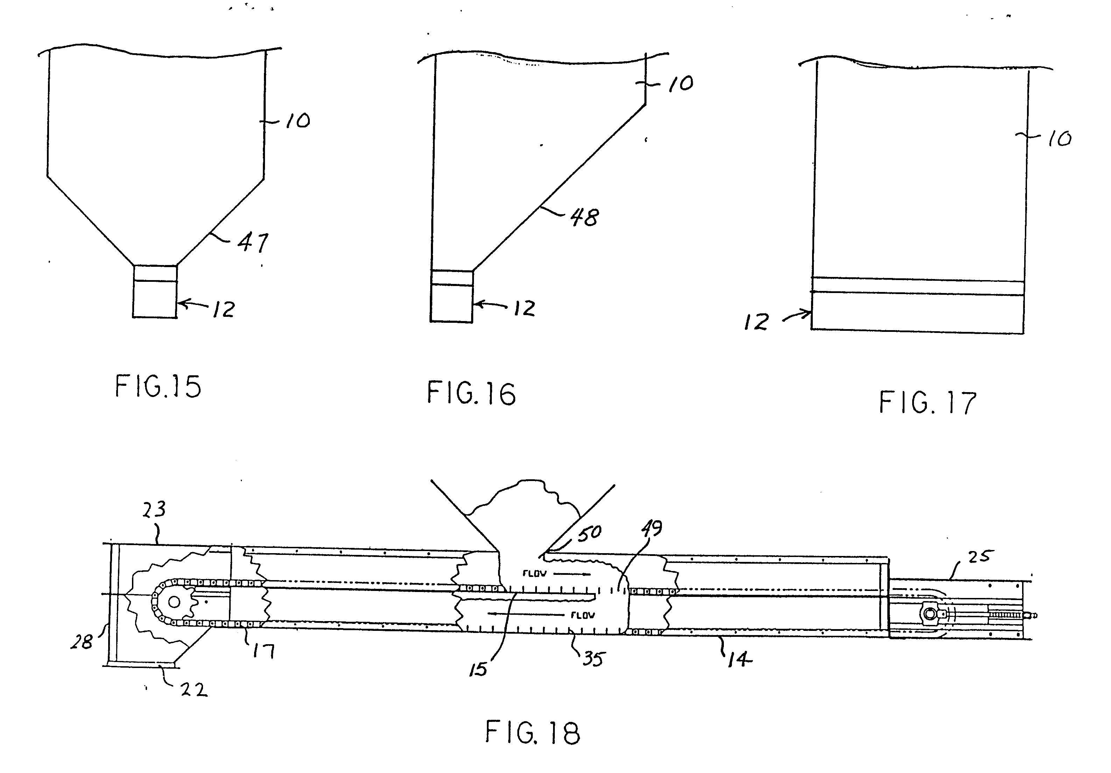

The discharge device of this invention is adaptable to various forms of bin bottoms and, as shown in Figure 15, the bin may have a pair of sloping bottom walls and a central opening beneath which is mounted the discharge device 12. As shown in Figure 16, it may also be used with a bin having a single sloped bottom wall 48 or it may be mounted across the entire bottom of a bin without sloping walls as shown in Figure 17.

Another feature of the invention is illustrated by Figure 18. This shows an alternative way of utilizing the conveyor chain 17 with the drag bars 35. Thus, it will be seen that one or more openings 49 may be provided in the platform wall 15 so that particulate material entering through inlets 50 may be dragged along platform wall 15 then dropped down through hole or holes 49 in the platform wall and dragged in the opposite direction along bottom wall 14. This may be dragged to end outlet 23 or other outlets may be provided in bottom wall 14 as desired.

From the foregoing description, it will be apparent that various changes may be made in the form, location and relative arrangement of several parts without departing from the scope of the invention.

## Claims

1. A discharge device for withdrawing particulate material from a series of outlets extending across the bottom of a storage container or bin, said outlets being arranged in a row with each outlet having a front wall and a rear wall, a discharge channel positioned beneath said row of outlets and aligned longitudinally with said row, said channel having parallel side walls extending downwardly adjacent the sides of the outlets and a platform joining said side walls, an endless conveyor adapted to move longitudinally within the channel along said platform,

characterized in that the bottom ends of said outlet front and rear walls are vertically spaced from the conveyor on the platform in progressively increasing amounts in the direction of travel of the conveyor, whereby particulate material can be discharged at a substantially uniform rate across the storage bin.

2. A device according to claim 1 wherein the outlets are formed by a series of upwardly extending divider plates extending across between opposite side walls with the bottom ends of said divider plates being vertically spaced from the conveyor on the platform in progressively increasing amounts in the direction of travel of the conveyor.

3. A device according to claim 2 wherein the divider plates include upper inclined panels to carry a substantial portion of the weight of particulate material moving downwardly through the bottom of the bin.

4. A device according to claim 3 wherein the bottom end of one divider plate is substantially in vertical alignment with the top end of the adjacent inclined panel.

5. A device according to claim 3 or 4 wherein each divider plate includes an inclined portion and a substantially vertical lower portion, said inclined portions being of substantially equal length and the vertical lower portions being of progressively decreasing lengths in the direction of travel of the conveyor.

6. A device according to claim 1 wherein the outlets are in the form of a series of separate, spaced outlets arranged in a row across the bottom of the bin, with divider walls extending downwardly from the front and rear edges of the outlets and the bottom ends of the divider walls being vertically spaced from the conveyor on the platform in progressively increasing amounts in the direction of travel of the conveyor.

7. A device according to any preceding claim wherein the conveyor comprises an endless chain with transverse drag bars.

8. A device according to any of claims 1 to 6 wherein the conveyor comprises a belt.

9. A device according to claim 8 which includes a discharge opening for particulate material in the channel bottom wall adjacent one end thereof.

10. A device according to claim 7 which includes a bottom wall located below the platform such that the endless chain conveyor travels in one direction along the platform and in the opposite direction along the bottom wall, and wherein the platform contains at least one opening over which the endless chain passes whereby particulate material is pulled in one direction on the platform, falls through the opening and is pulled in the opposite direction along the bottom wall.

FIG. 1

FIG. 2

FIG. 3

FIG. 4

FIG. 5

FIG. 6

0 281 231

FIG. 8

FIG. 7

32

33

34

16

FIG. 9

35

17

FIG. 10

FIG.11

FIG.12

FIG.13

FIG.14

FIG.17

FIG.16

FIG.15

FIG.18